# EUROPEAN PATENT APPLICATION

(11) **EP 4 607 678 A1**
(43) Date of publication of application: **27.08.2025**
(21) Application number: 24854296.1
(22) Date of filing: 25.06.2024
(51) Int. Cl.: H01M 50/342, H01M 50/211, H01M 10/04, H01M 10/658

(54) **BATTERY MODULE AND BATTERY PACK INCLUDING SAME**

(30) Priority: 11.08.2023 KR 20230105716
(71) Applicant: LG Energy Solution, Ltd., Seoul 07335 (KR)
(72) Inventor: JUNG, Kitaek, Daejeon 34122 (KR)
(74) Representative: BCKIP Part mbB
(86) International application number: PCT/KR2024/008767
(87) International publication number: WO 2025/037743

(57) **Abstract**

The present disclosure includes a battery module and a battery pack including the same, and the battery module according to one embodiment of the present disclosure comprises: a battery cell stack in which a plurality of battery cells are stacked; a module frame which comprises a lower frame on which the battery cell stack is mounted, and an upper cover that is coupled with the lower frame while covering the upper part of the battery cell stack; end plates which cover the front and rear surfaces of the battery cell stack; a heat insulating member which is located while covering the upper part and both side surface parts of the module frame, and located while covering the end plate; and a cover member which is located on the heat insulating member, located while covering a partial region of the upper part, both side surface parts and the lower part of the module frame, and located while covering the end plate.

## Description

### [TECHNICAL FIELD]

### Cross Citation with Related Application(s)

This application claims the benefit of Korean Patent Application No. 10-2023-0105716 filed on August 11, 2023 in the Korean Intellectual Property Office, the disclosure of which is incorporated herein by reference in its entirety.

The present disclosure relates to a battery module and a battery pack including the same, and more particularly, to a battery module improved in safety by maintaining structural stability of a battery module, and a battery pack including the same.

### [BACKGROUND]

With technology development of mobile devices, and an increase in demand therefor, demand for secondary batteries as energy sources has been rapidly increasing. A lot of researches on secondary batteries capable of meeting various needs have been carried out accordingly.

A secondary battery has attracted considerable attention as an energy source for power-driven devices, such as an electric bicycle, an electric vehicle, and a hybrid electric vehicle, as well as an energy source for mobile devices, such as a mobile phone, a digital camera, and a laptop computer.

Recently, along with a continuous rise of the necessity for a large-capacity secondary battery structure, including the utilization of the secondary battery as an energy storage source, there is a growing demand for a battery pack of a multi-module structure which is an assembly of battery modules in which a plurality of secondary batteries are connected in series/parallel.

Meanwhile, when a plurality of battery cells are connected in series or in parallel to configure a battery pack, it is common to configure a battery module composed of at least one battery cell first and then configure a battery pack by using at least one battery module and adding other components. Since battery cells constituting such a medium- or large-sized battery module are composed of secondary batteries which can be charged and discharged, such a high-output large-capacity secondary battery generates a large amount of heat in a charge and discharge process. Consequently, the electrolyte located in the battery cell may vaporize and the internal pressure increases to cause the battery cell pouch to rupture, which may lead to occurrence of venting gas or flames, and therefore, there is a need to prevent them from spreading or exploding into adjacent battery modules.

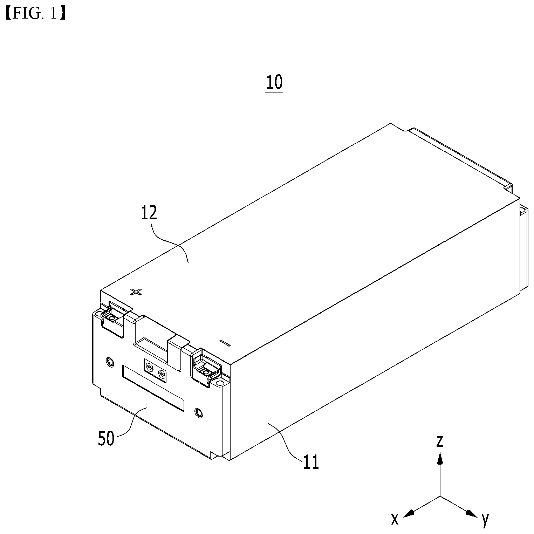

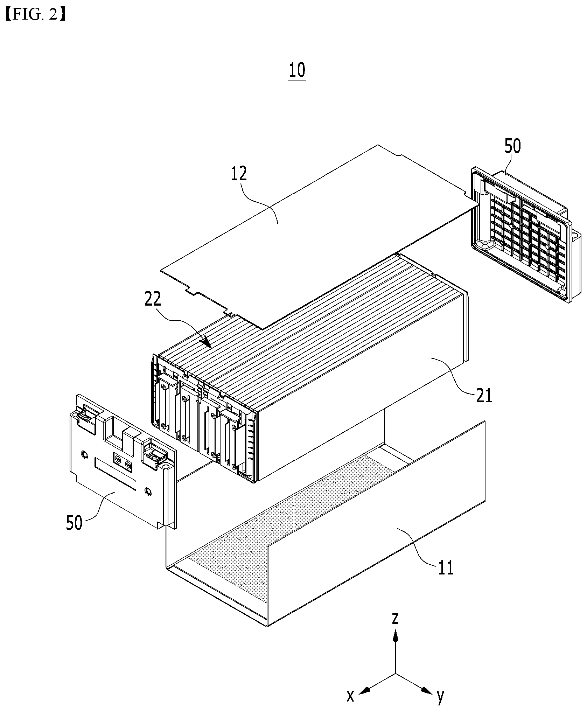

FIG. 1 is a perspective view of a conventional battery module. FIG. 2 is an exploded perspective view of a conventional battery module.

Referring to FIGS. 1 and 2, a conventional battery module 10 includes a lower frame 11 on which a battery cell stack 22, in which a plurality of battery cells 21 are stacked, is mounted, an upper frame 12 which is connected to the lower frame 11 while covering the upper part (z-axis direction) of the battery cell stack 22, and end plates 50 which cover the front and rear surfaces of the battery cell stack 22.

In this case, if venting gas or flames occur in the battery cell 21, venting can occur in the gap between the lower frame 11 and the upper frame 12, or between the frames and the end plates 50, and in this case, the structure of the battery module 10 itself may collapse due to the pressure at the time of venting, so that flames or the like may spread to adj acent battery modules 10, which is problematic in that explosion of the battery pack as a whole may occur.

Therefore, in order to prevent the above-mentioned problems, it is necessary to develop a battery module that can ensure the safety of the battery at the time of venting.

### [DETAILED DESCRIPTION OF THE INVENTION]

### [Technical Problem]

It is an object of the present disclosure to provide a battery module having improved safety and a battery pack including the same.

However, the technical object of the present disclosure is not limited to the aforementioned one, and may be extended in various ways within the scope of the technical idea included in the present disclosure.

### [Technical Solution]

According to one embodiment of the present disclosure, there is provided a battery module comprising: a battery cell stack in which a plurality of battery cells are stacked; a module frame which comprises a lower frame on which the battery cell stack is mounted, and an upper cover that is coupled with the lower frame while covering the upper part of the battery cell stack; end plates which cover the front and rear surfaces of the battery cell stack; a heat insulating member which is located while covering the upper part and both side surface parts of the module frame, and located while covering the end plate; and a cover member which is located on the heat insulating member, located while covering the upper part, both side surface parts and a partial region of the lower part of the module frame, and located while covering the end plate.

The upper cover may comprise a plurality of venting holes penetrating through the upper cover, the heat insulating member may comprise a first heat insulating member covering the upper part of the module frame, and the first heat insulating member may comprise a heat insulating rupture part which is provided at a position corresponding to the venting hole and is a groove formed in the first heat insulating member.

The cover member may comprise a first cover member covering the first heat insulating member, and the first cover member may comprise a cover rupture part which is provided at a position corresponding to the venting hole, and is a groove formed in the first cover member.

A terminal busbar is partially exposed and located on the end plate, with the terminal busbar electrically being connected to the battery cell stack, the heat insulating member may comprise a second heat insulating member covering a front surface and a rear surface of the end plate, and the second heat insulating member may comprise a terminal heat insulating part covering a front surface of the terminal busbar.

The cover member may comprise a second cover member covering the second heat insulating member, and the second cover member may comprise a 2-1 cover part covering the terminal heat insulating part.

The end plate may comprise a connecting part located on both side surfaces of the end plate, and an upper surface and a lower surface of the connecting part may be provided while having a height difference between an upper surface and a lower surface of the end plate.

The cover member may comprise a second cover member covering the end plate, and the second cover member may comprise a 2-2 cover part covering the upper surface and the lower surface of the connecting part.

The 2-2 cover part may be formed by allowing the second cover member to be folded in a direction perpendicular to one surface located on the end plate.

The heat insulating member may comprise a third heat insulating member covering both side surface parts of the module frame, the cover member may comprise a third cover member covering the third heat insulating member, and the third cover member may comprise a 3-1 cover part formed by allowing the third cover member to be folded in a direction perpendicular to one surface located on the third heat insulating member.

The 3-1 cover part may cover the front and rear surface of the end plate which are not covered from the second cover member covering the end plate but are exposed to the outside.

The third cover member may comprise a 3-2 cover part that covers a side surface of the end plate exposed to the outside, while being located on both side surfaces of the third cover member.

The third cover member may further comprise a 3-3 cover part extending in the longitudinal direction of the 3-2 cover part.

The 3-3 cover part may cover the front surface and the rear surface of the end plate by allowing the 3-2 cover part to be folded in a direction perpendicular to one surface located on the third heat insulating member.

The cover member may comprise a fourth cover member located while covering a bottom part which is a lower part of the lower frame.

The fourth cover member may be one region which extends in the height direction of the second cover member covering the end plate and the third cover member covering both side surface parts of the module frame, respectively.

The fourth cover member may be a portion formed by allowing the second cover member to be folded in a direction perpendicular to one surface located on the end plate, and the fourth cover member may be a portion formed by allowing the third cover member to be folded in a direction perpendicular to one surface located on both side surface parts of the module frame.

The heat insulating member may comprise silicon(Si).

The cover member may comprise an insulating material made of mica(MICA) or an inorganic material.

According to another embodiment of the present disclosure, there is provided a battery pack comprising the above-mentioned battery module.

### [Advantageous Effects]

According to embodiments, it is possible to improve safety by maintaining structural stability of a battery module at the time of venting, and a battery pack including the same.

The effects of the present disclosure are not limited to the effects mentioned above and additional other effects not described above will be clearly understood from the detailed description of the appended claims by those skilled in the art.

### [BRIEF DESCRIPTION OF THE DRAWINGS]

FIG. 1 is a perspective view of a conventional battery module;
FIG. 2 is an exploded perspective view of a conventional battery module;
FIG. 3 is a perspective view of a battery module according to one embodiment of the present disclosure;
FIG. 4 is an exploded perspective view of a battery module according to one embodiment of the present disclosure;
FIG. 5 is an exploded perspective view of a battery module excluding a heat insulating member and a cover member of the present disclosure;
FIG. 6 is a perspective view of a heat insulating member according to one embodiment of the present disclosure;
FIG. 7 is a perspective view of a cover member according to one embodiment of the present disclosure;
FIG. 8 is a plan view of the cover member of FIG. 7;
FIG. 9 is a diagram of the battery module of FIG. 3 as viewed in the -z-axis direction;
FIG. 10 is a diagram of the battery module of FIG. 3 as viewed in the x-axis direction and the -x-axis direction;
FIG. 11(a) is a perspective view showing a conventional battery module, and FIG. 11(b) is a perspective view of a battery module according to one embodiment of the present disclosure;
FIG. 12(a) is a perspective view showing a conventional battery module, and FIG. 12(b) is a perspective view of a battery module according to one embodiment of the present disclosure;
FIG. 13 is a diagram of the battery module of FIG. 3 as viewed in the y-axis direction and the -y-axis direction; and
FIG. 14 is a diagram of the battery module of FIG. 3 as viewed in the z-axis direction.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means arranged on or below a reference portion, and does not necessarily mean being arranged on the upper end of the reference portion toward the opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

The terms first, second, etc. may be used herein to describe various components, but the components are not to be limited by the terms. The terms may only be used for the purpose of distinguishing one component from another.

Further, in this application, the upper part and the lower part may be defined as meaning the z-axis direction and the -z-axis direction, the side surface as meaning the y-axis direction and the -y-axis direction, and the front surface and the rear surface as meaning the x-axis direction and the -x-axis direction, respectively. However, these names are arbitrarily defined within the specification for convenience, and the scope of rights is not limited thereto.

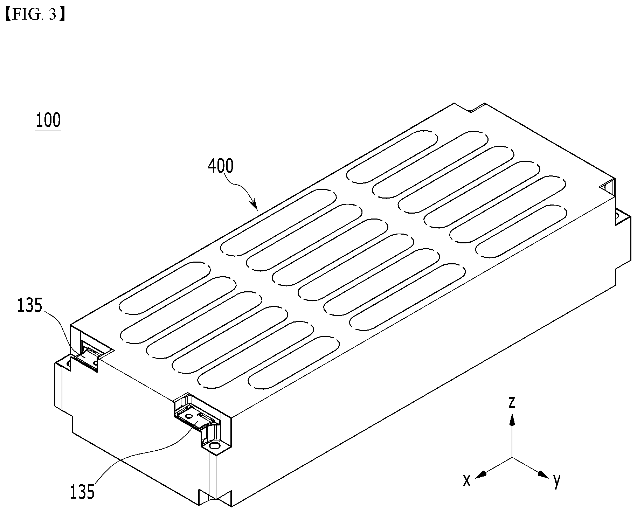

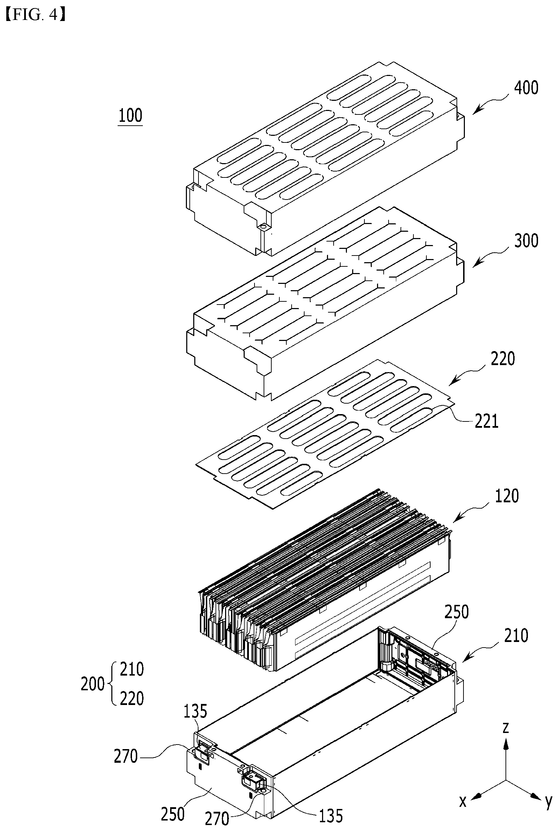

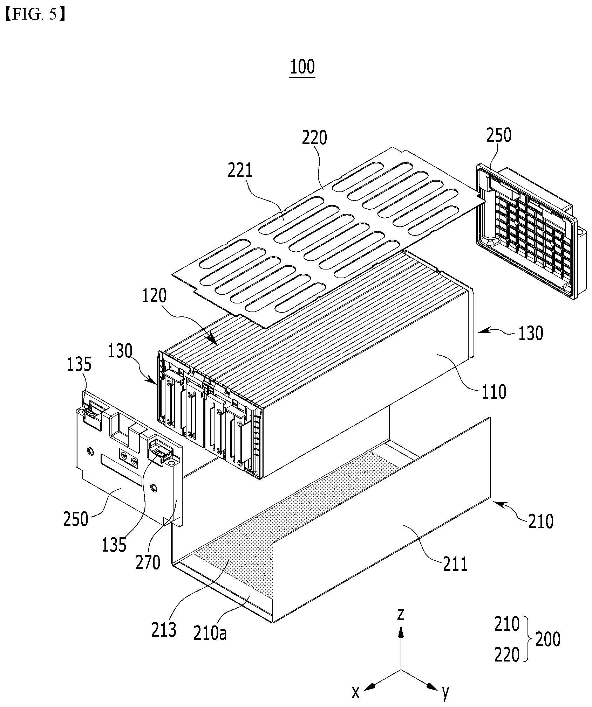

FIG. 3 is a perspective view of a battery module according to one embodiment of the present disclosure. FIG. 4 is an exploded perspective view of a battery module according to one embodiment of the present disclosure. FIG. 5 is an exploded perspective view of a battery module excluding a heat insulating member and a cover member of the present disclosure.

Referring to FIGS. 3 and 4, a battery module 100 according to one embodiment of the present disclosure comprises a battery cell stack 120 in which a plurality of battery cells 110 are stacked, a module frame 200 that houses the battery cell stack 120, end plates 250 that cover the front and rear surfaces of the battery cell stack 120, and a heat insulating member 300 and a cover member 400 that cover the module frame 200 and the end plate 250.

Referring to FIGS. 3 to 5, first, the battery cell 110 may be a pouch-type battery cell. Such a pouch-type battery cell may be formed by housing an electrode assembly in a pouch case made of a laminate sheet including a resin layer and a metal layer, and then heat-fusing a sealing part of the pouch case. In this case, the battery cell may be formed in a rectangular sheet-like structure. However, the battery cell 110 is not limited to a pouch-type battery cell, and may be various types of battery cells.

The battery cells 110 may be configured by a plurality of cells, and the plurality of battery cells 110 are stacked so as to be electrically connected to each other, thereby forming a battery cell stack 120. In particular, as shown in FIG. 5, a plurality of battery cells 110 may be stacked along a direction parallel to the y-axis.

A module frame 200 that houses a battery cell stack 120 may include an upper cover 220 and a lower frame 210.

The lower frame 210 may include a bottom part 210a and two side surface parts 211 extending upward from both ends of the bottom part 210a. The bottom part 210a may cover the lower surface (-z-axis direction) of the battery cell stack 120, and the side surface parts 211 may cover both side surfaces (y-axis direction and -y-axis direction) of the battery cell stack 120.

A thermally conductive resin layer 213 may be located on the bottom part 210a of the lower frame 210. The thermally conductive resin layer 213 may be located between the battery cell stack 120 and the bottom part 210a of the lower frame 210, so that the battery cell stack 120 may be fixedly located on the bottom part 210a of the lower frame 210.

The upper cover 220 may be formed in a single plate-like structure that covers the remaining upper part (z-axis direction) excluding the lower part and both side surface parts of the battery cell stack 120 encased by the lower frame 210. The upper cover 220 and the lower frame 210 are coupled by welding or the like in a state where the corresponding edge parts are in contact with each other, thereby capable of forming a structure that covers the battery cell stack 120 in the upper-lower and left-right directions.

The upper cover 220 may include a plurality of venting holes 221 that penetrate through the upper cover 220. The venting holes 221 may be holes that penetrate through the upper cover 220 in the height direction (z-axis direction). Consequently, when venting gas or flames occur in the battery cell 110, they may be discharged to the outside of the module frame 200 via the venting holes 221.

The module frame 200 can physically protect the battery cell stack 120. For this purpose, the module frame 200 may include a metal material having a predetermined strength.

On the other hand, although not specifically illustrated in the figure, the module frame 200 according to a modified embodiment may be a mono frame in the form of a metal plate material in which the upper surface, lower surface, and both side surfaces are integrated. That is, this is not a structure in which the lower frame 210 and the upper cover 220 are coupled to each other, but may be a structure produced by extrusion molding so that the upper surface, lower surface, and both side surfaces are integrated. Furthermore, the structure of the module frame 200 may be provided as an L-shaped frame structure in addition to the mono frame or lower frame, and may be provided as various structures not described in the above embodiments.

The structure of the module frame 200 may be provided in an open form along the longitudinal direction of the battery cell stack 120. That is, the front surface (x-axis direction) and the rear surface (-x-axis direction) of the battery cell stack 120 may not be hidden by the module frame 200. Therefore, the front surface and the rear surface of the battery cell stack 120 may be hidden by the busbar assembly 130, the end plate 250, and the like, whereby the front surface and the rear surface of the battery cell stack 120 may be protected from external physical impacts, and the like.

The busbar assembly 130 includes a busbar frame and a busbar mounted on one surface of the busbar frame.

The busbar frame may be located on the front surface and/or the rear surface of the battery cell stack 120 to cover one surface of the battery cell stack 120 and, at the same time, guide connection between the battery cell stack 120 and an external device. The busbar may be mounted on one surface of the busbar frame to electrically connect the battery cell stack 120 or battery cells 110 to an external device circuit.

The busbar may include a terminal busbar 135 for electrically connecting one battery module 100 to other battery modules 100. That is, at least a part of the terminal busbar 135 may be exposed to the outside of the end plate 250 in order for one battery module 100 to connect to other battery modules 100 adjacent thereto.

The terminal busbar 135 may be connected to other battery modules 100 or a BDU (Battery Disconnect Unit) via a protrusion part exposed to the outside of the end plate 250, and may form an HV (High voltage) connection with them.

The end plate 250 can hermetically seal an open surface of the module frame 200 to thereby protect the battery cell stack 120 and electrical components connected thereto from external physical impacts. For this purpose, the end plate 250 may be made from a material having a predetermined strength. For example, the end plate 250 may include a metal such as aluminum.

The end plate 250 may include a connecting part 270 that can couple and fix the battery module 100 and the pack frame by a fastening member. That is, the connecting part 270 may couple and fix the end plate 250 and the battery pack by a fastening member.

The connecting part 270 may be located on both side surfaces of the end plate 250. The connecting part 270 may include a hole that penetrates through the connecting part 270 in the height direction (z-axis direction) of the battery module 100, and may be located while a fastening member passes through the hole. That is, a fastening member can fixedly couple the module frame and the pack frame via the connecting part 270, so that the battery module 100 may be more firmly located on the battery pack, thereby improving the mechanical stability of the battery.

The end plate 250 can be coupled (joined, sealed, or hermetically sealed) with the module frame 200 while covering the busbar assembly 130 located on one surface of the battery cell stack 120.

The heat insulating member 300 can be located while covering the module frame 200. Specifically, the heat insulating member 300 can be located while covering the upper part, both side surface parts, and the front surface part and rear surface part of the module frame 200. The heat insulating member 300 is formed of a material having heat insulation properties, so that heat transfer between one battery module 100 and an adjacent battery module 100 can be prevented from being easy. Therefore, even when the temperature of one battery module 100 rises, it is possible to prevent the adjacent battery modules 100 from increasing in the temperature due to reception of heat transfer, thereby being capable of preventing occurrence of a thermal runaway phenomenon or the like resulting therefrom.

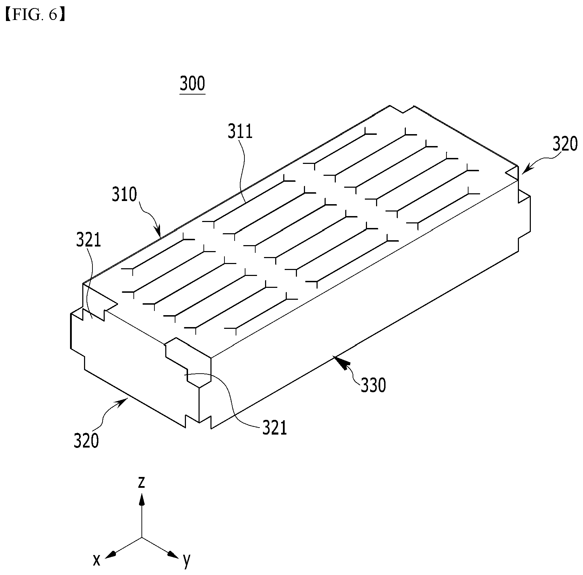

The heat insulating member 300 will be described in more detail with reference to FIG. 6.

The cover member 400 can be located while covering the module frame 200 and the heat insulating member 300. Specifically, the cover member 400 can be located while covering the whole of the outer peripheral surface of the heat insulating member 300 and covering at least a part of the lower part (-z-axis direction) of the module frame 200. In this case, the cover member 400 can be located while covering a part of the bottom part 210a of the lower frame 210.

The cover member 400 is located while covering the module frame 200 and the heat insulating member 300, whereby even when a thermal runaway phenomenon occurs in the battery module 100, it is possible to guarantee insulation with the adjacent battery module 100 or battery pack, thereby ensuring the safety of the battery.

Further, the cover member 400 is located while covering a part of the bottom part 210a of the module frame 200, whereby even if a venting phenomenon occurs in the battery cell stack 120 and the pressure inside the battery module 100 increases, it is possible to prevent the cover member 400 from being detached or peeled off from the module frame 200. Therefore, it is possible to secure insulation properties of the battery module 100 even at the time of venting.

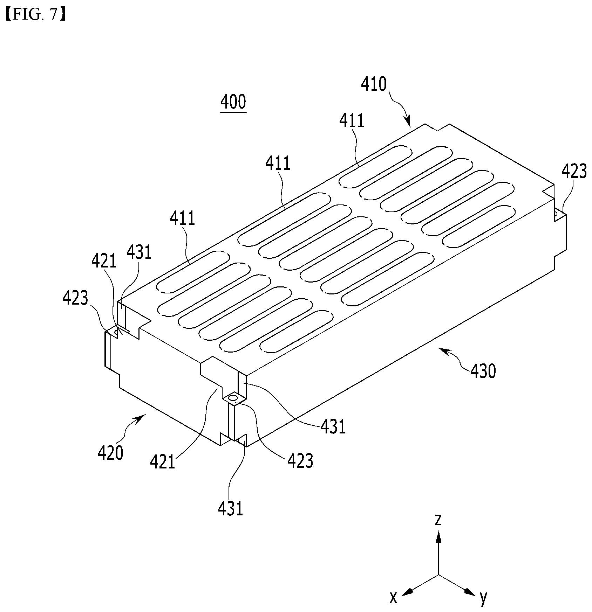

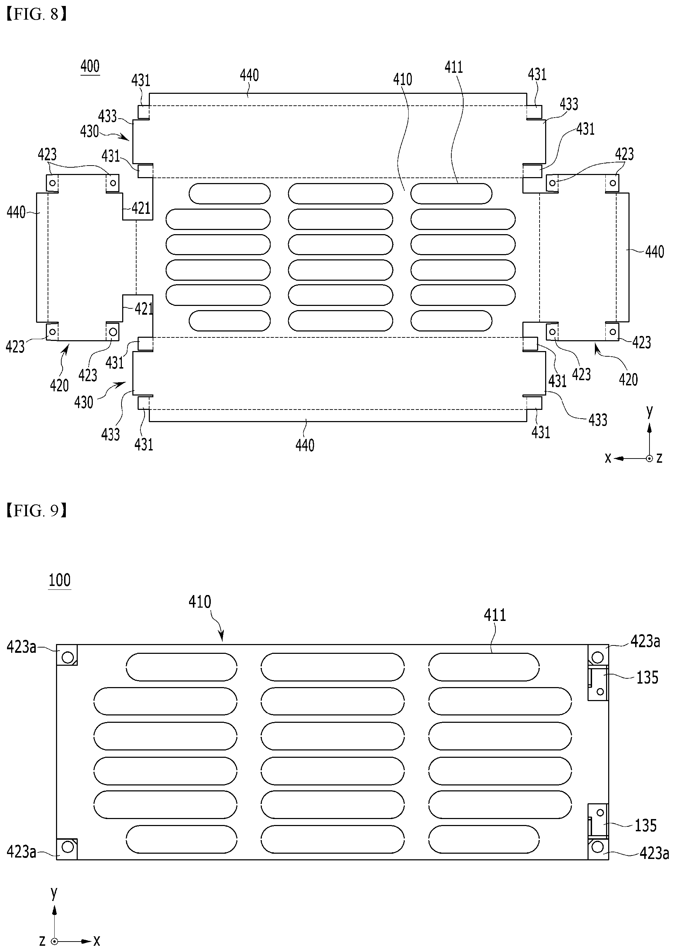

The cover member 400 will be described in more detail with reference to FIGS. 7 and 8.

FIG. 6 is a perspective view of a heat insulating member according to one embodiment of the present disclosure.

Referring to FIGS. 4 and 6, a heat insulating member 300 according to one embodiment of the present disclosure is located while covering the module frame 200.

The heat insulating member 300 includes: a first heat insulating member 310 covering the upper part (z-axis direction) of the module frame 200, a second heat insulating member 320 covering the front and rear surfaces (x-axis direction and -x-axis direction) of the module frame 200, and a third heat insulating member 330 covering both side surfaces (y-axis direction and - y-axis direction) of the module frame 200. In this case, the first heat insulating member 310, the second heat insulating member 320, and the third heat insulating member 330 may be located while covering the outer peripheral surface of the module frame 200, respectively.

The first heat insulating member 310 may include a heat insulating rupture part 311.

The heat insulating rupture part 311 is a groove formed in the first heat insulating member 310 and is ruptured due to internal pressure, so that venting gas or flames, etc. occurring in the battery cell stack 120 can be discharged to the outside.

A plurality of the heat insulating rupture part 311 may be formed in the first heat insulating member 310. Specifically, the heat insulating rupture part 311 may be a groove formed in plural numbers in one region of the first heat insulating member 310 facing the venting hole 221 of the upper cover 220. Therefore, the number and size of the heat insulating rupture part 311 may correspond to the number and size of the venting hole 221. The number of the heat insulating rupture part 311 may be the same as the number of venting holes 221, and the size of the heat insulating rupture part 311 may be the same as or smaller than the size of the venting holes 221.

In this figure, the heat insulating rupture parts 311 are illustrated as one straight line and in a shape in which both ends of the straight line are divided into two, but they are not limited to such shapes and can be changed to any shape as long as they correspond to the size of the venting holes 221.

When venting gas or flames occur in one battery cell 110, they can move to the outside of the module frame 200 only through partial venting holes 221 among the plurality of venting holes 221. In this case, only the heat insulating rupture parts 311 provided at positions corresponding to the partial venting holes 221 through which the venting gas or flames have moved can be ruptured by internal pressure. Consequently, only some of the plurality of heat insulating rupture parts 311 are ruptured and the other heat insulating rupture parts 311 are not ruptured, thereby dividing the battery cell stack 120 and the external environment. Therefore, venting gas, flames, and high-temperature particles, etc. may not backflow to the inside of the module frame 200. Therefore, venting gas, flames, and high-temperature particles, etc. discharged to the outside may not affect normal battery cells 110, so that the safety of the battery can be improved.

The second heat insulating member 320 may include a terminal heat insulating part 321.

The terminal heat insulating part 321 may be configured to cover a part of the terminal busbar 135 exposed to the outside of the end plate 250. Specifically, the terminal heat insulating part 321 may be configured to cover the front surface (x-axis direction) of the terminal busbar 135 exposed to the outside of the end plate 250.

The terminal busbar 135 is configured to be inevitably exposed through electrical connection between one battery module and an adjacent battery module. Generally, the battery modules can be electrically connected via the upper surface (z-axis direction) of the terminal busbar 135. In this case, the side surface of the terminal busbar 135 can be exposed to the outside while being not used for electrical connection with other battery modules, so that the corresponding region can be covered via the terminal heat insulating part 321. This makes it possible to prevent a short circuit between adjacent battery modules. In addition, when a thermal runaway phenomenon occurs in one battery module, heat transfer or flame transfer to other battery modules is prevented, and the backflow of venting gas or flames is prevented, thereby improving the safety of the battery.

The heat insulating member 300 can be formed of a material having heat insulation properties. For example, the heat insulating member 300 can be formed of silicon (Si).

In summary, the heat insulating member 300 covers the upper part, both side surfaces, and the front and rear surfaces of the module frame 200, whereby when a thermal runaway phenomenon occurs, the module frame 200 exposed to the outside can be protected from venting gas or flames. In addition, since the components inevitably exposed to the outside can be covered to the maximum extent, the backflow of venting gas or flames can be prevented, thereby improving the safety of the battery.

FIG. 7 is a perspective view of a cover member according to one embodiment of the present disclosure. FIG. 8 is a plan view of the cover member of FIG. 7.

Referring to FIGS. 4, 7 and 8, a cover member 400 according to one embodiment of the present disclosure is located while covering a module frame 200 and a heat insulating member 300.

The cover member 400 includes a first cover member 410 that covers the upper part (z-axis direction) of the heat insulating member 300, a second cover member 420 that covers the front and rear surfaces (x-axis direction and -x-axis direction) of the heat insulating member 300, a third cover member 430 that covers both side surfaces (y-axis direction and -y-axis direction) of the heat insulating member 300, and a fourth cover member 440 that covers the bottom part 210a of the module frame 200. In this case, the first cover member 410, the second cover member 420, and the third cover member 430 can be located while covering the outer peripheral surface of the heat insulating member 300, respectively, and the fourth cover member 440 can be located while partially covering the bottom part 210a of the module frame 200.

The first cover member 410, the second cover member 420, the third cover member 430, and the fourth cover member 440 are all formed by being connected as one, and can be folded and divided to correspond to the shape of the module frame. Specifically, the first cover member 410, the second cover member 420, the third cover member 430 and the fourth cover member 440 can be folded and divided along the dotted lines shown in FIG. 8.

The cover member 400 can be formed from a material having fire resistance and/or flame retardancy. For example, the cover member 400 can include an insulating material composed of mica(MICA) or an inorganic material. Such a cover member 400 can withstand even at a temperature of about 1000 degrees or more, and thus prevent short circuits that may occur between one battery module and an adjacent battery module, or between a battery module and a battery pack due to the cover member 400, thereby improving the stability of the battery.

FIG. 9 is a diagram of the battery module of FIG. 3 as viewed in the -z-axis direction.

Referring to FIG. 4, and FIGS. 7 to 9, the first cover member 410 according to one embodiment of the present disclosure is located while covering the upper part (z-axis direction) of the battery module 100.

The first cover member 410 can be located while covering the upper part (z-axis direction) of the upper cover 220 of the module frame 200 and the upper part (z-axis direction) of the heat insulating member 300 which are located at the upper part of the battery module.

Since the first cover member 410 can be located while wholly covering the outer peripheral surface of the upper cover 220, the size of the first cover member 410 can be the same as or larger than the size of the upper cover 220. In addition, since the first cover member 410 can be located while wholly covering the upper part of the heat insulating member 300, the size of the first cover member 410 can be the same as or larger than the size of the upper part of the heat insulating member 300.

The first cover member 410 can include a plurality of cover rupture parts 411.

The cover rupture part 411 is a groove formed in the first cover member 410, and can discharge venting gas, flames or the like discharged via the venting hole 221 of the upper cover 220 and the heat insulating rupture part 311 of the heat insulating member 300 to the outside. At this time, the cover rupture part 411 is ruptured by the internal pressure increased due to the venting gas, flames or the like, so that they can be discharged to the outside.

The cover rupture part 411 may be a groove formed in plural numbers in the first cover member 410. Specifically, the cover rupture part 411 may be a groove formed in plural numbers in one region of the first cover member 410 facing the venting hole 221 provided in the upper cover 220. Further, the cover rupture part 411 may be a groove formed in plural numbers in one region of the first cover member 410 facing the heat insulating rupture part 311 provided on the upper part of the heat insulating member 300. Therefore, the cover rupture part 411 may be provided at positions corresponding to the plurality of venting holes 221 and the heat insulating rupture part 311, respectively.

The cover rupture part 411 may be a groove formed in the same shape as the venting hole 221 provided in the upper cover 220. Therefore, when the cover rupture part 411 is ruptured by internal pressure, it may form a hole in the same shape as the venting hole 221. However, the shape of the cover rupture part 411 is not limited thereto, but may be changed to any shape that can be changed from the perspective of a person skilled in the art.

When venting gas or flames occur in one battery cell 110, these may move to the outside of the module frame 200 only through the partial venting holes 221 among the plurality of venting holes 221. In this case, only the heat insulating rupture part 311 provided at a position corresponding to the partial venting holes 221 through which the venting gas or flames have moved may be ruptured due to internal pressure. The venting gas or flames that have moved through the heat insulating rupture part 311 provided at a position corresponding to the partial venting holes 221 can be discharged to the outside while rupturing the cover rupture part 411 provided at a position corresponding thereto.

Consequently, only some of the plurality of cover rupture parts 411 are ruptured and the other cover rupture parts 411 are not ruptured, thereby dividing the battery cell stack 120 and the external environment, so that venting gas, flames, and high-temperature particles, etc. may not be backflow into the module frame 200. Therefore, venting gas, flames, and high-temperature particles discharged to the outside may not affect the normal battery cells 110, thereby improving the safety of the battery.

Referring to FIG. 9, when looking down at the battery module 100 in the z-axis direction, the portion exposed in the module frame 200, except for the terminal busbars 135, may be covered by the first cover member 410 and the first folding cover part 423a.

Here, the first folding cover part 423a constitutes the second cover member 420, and this will be examined in detail below while explaining the second cover member 420.

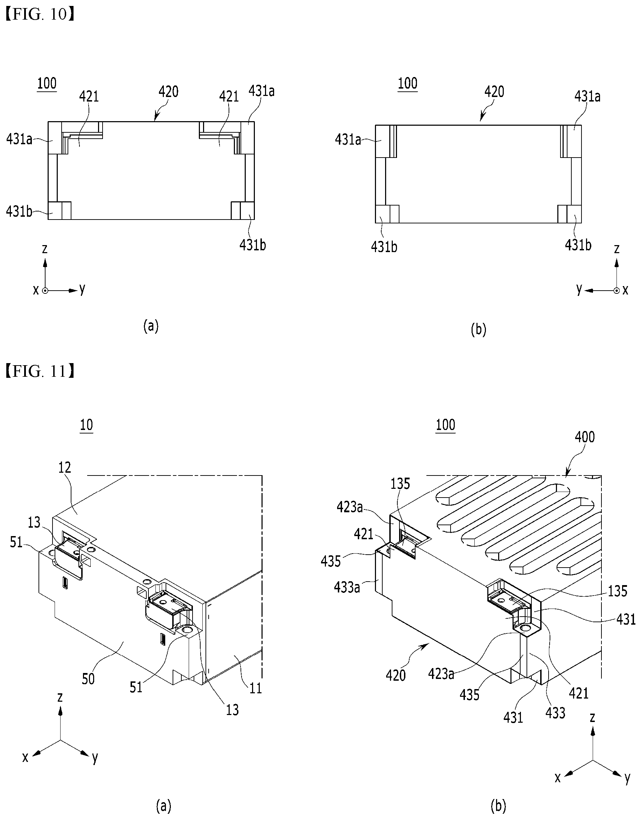

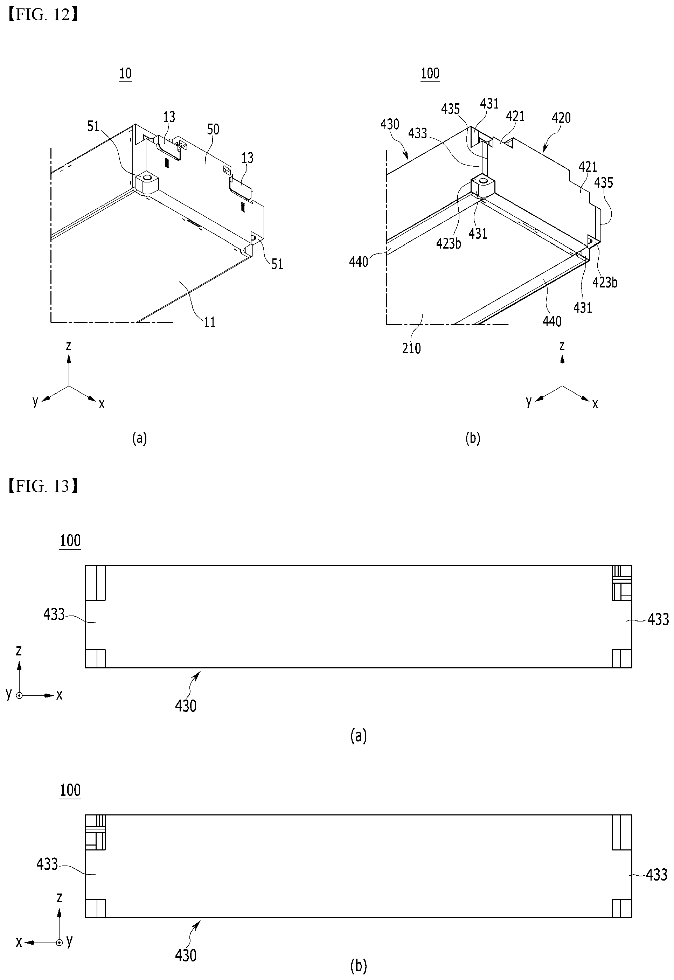

FIG. 10 is a diagram of the battery module of FIG. 3 as viewed in the x-axis direction and the -x-axis direction. FIG. 11(a) and FIG. 12(a) are perspective views showing a conventional battery module. FIG. 11(b) and FIG. 12(b) are perspective views of a battery module according to one embodiment of the present disclosure.

Referring to FIGS. 4, 7, 8 and 10, the second cover member 420 according to one embodiment of the present disclosure may be located while covering the front surface part (x-axis direction) and the rear surface part (-x-axis direction) of the battery module.

The second cover member 420 may be located while covering the end plate 250 and the heat insulating member 300 located on one side (x-axis direction) and the other side (-x-axis direction) of the battery module 100. One side of the battery module 100 may be the front surface of the battery module 100, and the other side of the battery module 100 may be the rear surface of the battery module 100. Here, FIG. 10(a) shows that the second cover member 420 is located while covering the front surface of the battery module 100 of the present disclosure, and FIG. 10(b) shows that the second cover member 420 is located while covering the rear surface of the battery module 100 of the present disclosure.

Since the second cover member 420 can be located while wholly covering the outer peripheral surface of the end plate 250, the size of the second cover member 420 may be the same as or larger than the size of the end plate 250. In addition, since the second cover member 420 can be located while covering the whole front and rear surfaces of the heat insulating member 300, the size of the second cover member 420 can be the same as or larger than the size of the heat insulating member 300.

In this case, the second cover member 420 covering the front surface part of the battery module 100 where the terminal busbar 135 is located can include a 2-1 cover part 421 and a 2-2 cover part 423.

The 2-1 cover part 421 can be configured to cover a part of the terminal busbar 135 exposed to the outside of the end plate 250. Specifically, the 2-1 cover part 421 may be configured to cover a heat insulating member 300 that covers a part of the terminal busbar 135 exposed to the outside of the end plate 250. Here, the heat insulating member 300 that covers a part of the terminal busbar 135 may be a terminal heat insulating part 321 (see FIG. 6).

The 2-1 cover part 421 may be configured to cover one region of the terminal busbar 135 that is exposed to the outside while being not used for electrical connection between battery modules. Specifically, the 2-1 cover part 421 may be located while covering the terminal heat insulating part 321 of the heat insulating member 300 once more.

Referring to FIG. 11(a) and FIG. 12(a), the terminal busbar 13 is mounted on the end plate 50 located on the front surface part (x-axis direction) of the conventional battery module 10 in a state where it is partially exposed to the outside. Specifically, in the conventional battery module 10, the terminal busbar 13 is exposed to the outside even on the side surface as well as the upper surface for electrical connection with the battery module. That is, unlike the battery module 100 according to one embodiment of the present disclosure, since the conventional battery module 10 does not has a heat insulating member or a cover member that covers the end plate 50 and the terminal busbar 13, there is a problem that the terminal busbar 15 may cause a short circuit between one battery module and adjacent other battery modules or battery packs. Further, if venting gas or flames occur in an adjacent battery module and discharged to the outside, venting gas or flames may flow into the assembly tolerance between the terminal busbar 13 and the end plate 50, and the terminal busbar 13 and the module frames 11 and 12, causing an explosion, etc., and there is a problem that the safety of the battery is reduced.

In contrast, referring to FIG. 11(b) and FIG. 12(b), it can be seen that the battery module 100 according to one embodiment of the present disclosure wholly covers the module frame by the cover member 400 as well as the heat insulating member. Specifically, it can be seen that the second cover member 420 covers the front surface part of the battery module 100, and at this time, it covers up to the side surface of the terminal busbar 135 by the 2-1 cover part 421. That is, the 2-1 cover part 421 can cover a side surface of the terminal busbar 135 that is unnecessarily exposed to the outside, thereby preventing occurrence of a short circuit between one battery module and an adjacent battery module or battery pack, etc. In addition, when venting gas or flames occur in an adjacent battery module and discharged to the outside, since the second cover member 420 covers the tolerance of the components assembled with the terminal busbar 13 unlike the conventional battery module 10, it is possible to prevent inflow of venting gas or flames, thereby improving the safety of the battery.

Referring again to FIGS. 4, 7 and 8, the 2-2 cover part 423 may be a part formed by allowing the second cover member 420 to be folded in a direction perpendicular to one surface located on the end plate 250, while being located on both side surfaces of the second cover member 420. At this time, the 2-2 cover part 423 may be located while covering the connecting part 270 of the end plate 250. Specifically, the 2-2 cover part 423 may be located while covering the upper surface (z-axis direction) and the lower surface (-z-axis direction) of the connecting part 270.

In the battery module 100 according to one embodiment of the present disclosure, since the upper and lower surfaces of the connecting part 270 are located while having a height difference between the upper surface and the lower surface of the end plate 250, they may not be covered by the first cover member 410 or the fourth cover member 440. Therefore, an upper surface and a lower surface of the connecting part 270 are inevitably exposed to the outside, whereby the 2-2 cover part 423 may be located while covering the connecting part 270 in order to prevent venting gas, flames, etc. from flowing into the battery module 100.

Referring to FIG. 11(a) and FIG. 12(a), the end plate 50 covering the front and rear surfaces (x-axis direction and -x-axis direction) of the conventional battery module 10 may include connecting parts 51 provided on both side surfaces of the end plate 250. In this case, not only the connecting part 51, but also both the end plate 50 and the module frame 11 and 12 may be exposed to the outside.

That is, unlike the battery module 100 according to one embodiment of the present disclosure, the conventional battery module 10 does not comprise a heat insulating member or a covering member covering the end plate 50, the connecting part 51, the module frames 11 and 12, etc., whereby when venting gas or flames, etc. occur in adjacent battery modules and discharged to the outside, there is a problem that venting gas or flames, etc., may flow between the assembly tolerances of the end plate 50 and the module frames 11 and 12 that are inevitably exposed to the outside, which may cause a problem that an explosion or the like may be generated and the safety of the battery is reduced. In addition, when a thermal runaway phenomenon, etc. occurs and the external shape of the battery module 10 collapses, there is a problem that a short circuit may occur between the battery module and the battery module, or between the battery module and the battery pack.

In contrast, referring to FIG. 11(b) and FIG. 12(b), it can be seen that the battery module 100 of the present disclosure is covered by a cover member 400 up to the connecting part 270 of the end plate 250 as well as the module frame 200. Specifically, the second cover member 420 covers the front and rear surfaces of the battery module 100, and the 2-2 cover part 423 folded in a state connected to the second cover member 420 can cover the upper surface and the lower surface of the connecting part 270.

In this case, the 2-2 cover part 423 may include a first folding cover part 423a that covers the upper surface of the connecting part 270, and a second folding cover part 423b that covers the lower surface of the connecting part 270. The first folding cover part 423a and the second folding cover part 423b are located while covering the upper and lower surfaces of the connecting part 270 that are inevitably exposed to the outside, thereby capable of preventing venting gas or flames from flowing into the battery module 100, and preventing occurrence of thermal runaway phenomena, etc. In addition, even if a thermal runaway phenomenon or the like occurs to causes the external shape of the battery module 100 to collapse, the 2-2 cover part 423 is located while wholly covering even the upper surface and the lower surface of the connecting part 270, thereby capable of preventing a short circuit between battery modules or between the battery module and the pack, and thus improving the safety of the battery.

FIG. 13 is a diagram of the battery module of FIG. 3 as viewed in the y-axis direction and the -y-axis direction.

Referring to FIGS. 4, 7, 8, and 13, the third cover member 430 according to one embodiment of the present disclosure can be located while covering both side surface parts (the y-axis direction and the -y-axis direction) of the battery module 100.

The third cover member 430 can be located while covering the side surface parts 211 (see FIG. 5) of the module frame 200 and both side surface parts of the heat insulating member 300 located on both side surface parts of the battery module. That is, the third cover member 430 may be located while covering the third heat insulating member 330 (see FIG. 6).

Since the third cover member 430 can be located while wholly covering the outer peripheral surface of the side surface part 211 of the module frame 200, the size of the third cover member 430 may be the same as or larger than the size of the side surface part 211. In addition, since the third cover member 430 can be located while wholly covering both side surface parts of the heat insulating member 300, the size of the third cover member 430 can be the same as or larger than the size of both side surface parts of the heat insulating member 300.

The third cover member 430 can include a 3-1 cover part 431 and a 3-2 cover part 433.

Referring to FIG. 8, FIG. 11(b) and FIG. 12(b), the 3-1 cover part 431 can be a portion formed by allowing the third cover member 430 to be folded in a direction perpendicular to one surface located on the third heat insulating member 330, while being located on both side surfaces of the third cover member 430. At this time, the 3-1 cover part 431 may be located while covering the end plate 250. Specifically, the 3-1 cover part 431 may be located while covering one region of the end plate 250 that is not covered by the first cover member 410 but is exposed to the outside. Here, one region of the end plate 250 covered by the 3-1 cover part 431 may be a front portion of the end plate 250 corresponding to the upper and lower surfaces of the connecting part 270.

Referring to FIG. 8, FIG. 11(b), FIG. 12(b), and FIG. 13, the 3-2 cover part 433 may be configured to cover the side surface (y-axis direction) of the end plate 250 exposed to the outside while being located on both side surfaces (x-axis direction and -x-axis direction) of the third cover member 430. Here, the side surface of the end plate 250 covered by the third cover member 430 may be the connecting part 270.

Specifically, the 3-2 cover part 433 may be located while covering one region of the connecting part 270 that is not covered by the first cover member 410 but is exposed to the outside. At this time, one region of the connecting part 270 may be the side surface of the connecting part 270.

The 3-2 cover part 433 may also cover the connecting part 270, while being located on both side surfaces of the third cover member 430 as shown in FIG. 13, but may further comprise a 3-3 cover part 435 that extends in the longitudinal direction (x-axis direction and -x-axis direction) of the 3-2 cover part 433, as shown in FIG. 11(b) and FIG. 12(b).

The 3-3 cover part 435 can be located while covering a front surface and a rear surface of the end plate 250 by allowing the 3-2 cover part 433 to be folded in a direction perpendicular to the side surface of the module frame 200, that is, one surface located on the third heat insulating member 330 (see FIG. 6). Specifically, the 3-3 cover part 435 may be located while encasing a part of the first cover member 410 that covers the front and rear surfaces of the end plate 250.

In this case, the 3-3 cover part 435 is located while covering one region of the first cover member 410 once more, thereby protecting one region of the battery module 100 exposed to the outside more reliably, preventing a short circuit between the battery module and other electrical components and the inflow of venting gas or flames, and finally improving the safety of the battery.

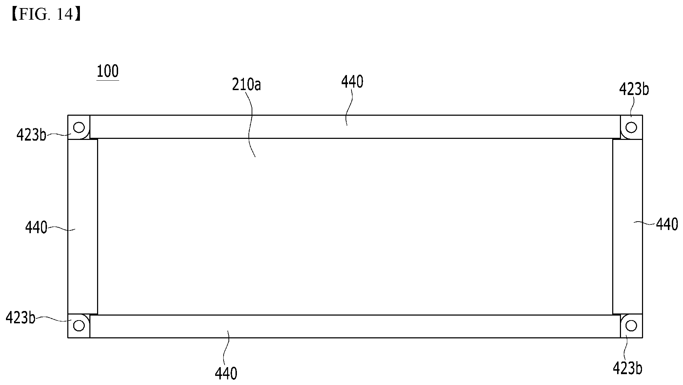

FIG. 14 is a diagram of the battery module of FIG. 3 as viewed in the z-axis direction.

Referring to FIG. 8, FIG. 12(b), and FIG. 14, the fourth cover member 440 according to one embodiment of the present disclosure may be located while covering the bottom part 210a of the battery module 100 which is the lower part (-z-axis direction). Specifically, the fourth cover member 440 may be located while covering a part of the bottom part 210a of the battery module 100.

The fourth cover member 440 may be one region where the second cover member 420 and the third cover member 430 extend in the height direction (z-axis direction), and may be a portion formed by allowing the second cover member 420 and the third cover member 430 to be folded in a direction perpendicular to one surface located on the battery module 100. That is, the fourth cover member 440 may be a portion formed by allowing the second cover member 420 to be folded in a direction perpendicular to one surface located on the end plate 250, or may be a portion formed by allowing the third cover member 430 to be folded in a direction perpendicular to one surface located on both side surface parts of the module frame 200.

Since the fourth cover member 440 is located while covering only a partial region of the bottom part 210a, an adhesive (not shown) is applied to the region of the bottom part 210a where the fourth cover member 440 is not located, so that the battery module 100 can be fixedly located on the battery pack frame. Thereby, the cover member 400 can cover the assembly tolerance between the module frame and the end plate constituting the battery module 100 to the maximum extent, and at the same time, secure the fixing force between the battery module 100 and the battery pack, so that the safety and mechanical stability of the battery can be improved at the same time.

Conventional battery modules 10 (see FIGS. 1 and 2) not only did not have a configuration covering the module frame like the cover member 400 of the present disclosure, but also even if they had a configuration corresponding to the cover member 400, it generally did not cover to the lower part of the battery module. In other words, even if a conventional battery module had a configuration corresponding to cover member 400 of the present disclosure, it only covered the upper part, both side surface parts, and front and rear surface parts of the battery module, and did not cover up to the lower part.

In contrast, the cover member 400 according to one embodiment of the present disclosure includes the fourth cover member 440, so that it can cover not only the upper part, both side surface parts, front and rear surface parts, but also the lower part of the battery module 100. In this case, the cover member 400 is located as if hanging on the lower part of the battery module 100, whereby even if a high pressure is applied from the inside to the outside of the cover member 400 due to a thermal runaway phenomenon, the cover member 400 can be prevented from being separated from the battery module 100 due to detachment. In addition, it can prevent flames or venting gas from flowing into the assembly tolerance between the module frame and the end plate, and it can delay heat transfer more effectively, so that the safety of the battery can be improved.

The above-mentioned battery module and a battery pack comprising the same can be applied to various devices. Such a device can be applied to a vehicle means such as an electric bicycle, an electric vehicle, or a hybrid vehicle, but the present disclosure is not limited thereto, and is applicable to various devices that can use a battery module and a battery pack comprising the same, which is also falls under the scope of the present disclosure.

Although the invention has been described in detail above with reference to preferred embodiments thereof, it will be appreciated by those skilled in the art that the scope of the present disclosure is not limited thereto, and various modifications and improvements can be made in these embodiment without departing from the principles and sprit of the invention, the scope of which is defined in the appended claims and their equivalents.

**[Description of Symbols]**

| | | | |
|---|---|---|---|
| 100: | battery module | 410: | first cover member |
| 135: | terminal busbar | 411: | cover rupture part |
| 200: | module frame | 420: | second cover member |
| 210: | lower frame | 421: | 2-1 cover part |
| 220: | upper cover | 423: | 2-2 cover part |
| 221: | venting hole | 430: | third cover member |
| 250: | end plate | 431: | 3-1 cover part |
| 270: | connecting part | 433: | 3-2 cover part |
| 300: | heat insulating member | 440: | fourth cover member |
| 400: | cover member | | |

## Claims

1. A battery module comprising:
a battery cell stack in which a plurality of battery cells are stacked;
a module frame which comprises a lower frame on which the battery cell stack is mounted, and an upper cover that is coupled with the lower frame while covering the upper part of the battery cell stack;
end plates which cover the front and rear surfaces of the battery cell stack;
a heat insulating member which is located while covering the upper part and both side surface parts of the module frame, and located while covering the end plate; and
a cover member which is located on the heat insulating member, located while covering the upper part, both side surface parts and a partial region of the lower part of the module frame, and located while covering the end plate.

2. The battery module according to claim 1, wherein:
the upper cover comprises a plurality of venting holes penetrating through the upper cover,
the heat insulating member comprises a first heat insulating member covering the upper part of the module frame, and
the first heat insulating member comprises a heat insulating rupture part which is provided at a position corresponding to the venting hole and is a groove formed in the first heat insulating member.

3. The battery module according to claim 2, wherein:
the cover member comprises a first cover member covering the first heat insulating member, and
the first cover member comprise a cover rupture part which is provided at a position corresponding to the venting hole, and is a groove formed in the first cover member.

4. The battery module according to claim 1, wherein:
a terminal busbar is partially exposed and located on the end plate, with the terminal busbar electrically being connected to the battery cell stack,
the heat insulating member comprises a second heat insulating member covering a front surface and a rear surface of the end plate, and
the second heat insulating member comprises a terminal heat insulating part covering a front surface of the terminal busbar.

5. The battery module according to claim 4, wherein:
the cover member comprises a second cover member covering the second heat insulating member, and
the second cover member comprises a 2-1 cover part covering the terminal heat insulating part.

6. The battery module according to claim 1, wherein:
the end plate comprises a connecting part located on both side surfaces of the end plate, and
an upper surface and a lower surface of the connecting part are provided while having a height difference between an upper surface and a lower surface of the end plate.

7. The battery module according to claim 6, wherein:
the cover member comprises a second cover member covering the end plate, and
the second cover member comprises a 2-2 cover part covering the upper surface and the lower surface of the connecting part.

8. The battery module according to claim 7, wherein:
the 2-2 cover part is formed by allowing the second cover member to be folded in a direction perpendicular to one surface located on the end plate.

9. The battery module according to claim 1, wherein:
the heat insulating member comprises a third heat insulating member covering both side surface parts of the module frame,
the cover member comprises a third cover member covering the third heat insulating member, and
the third cover member comprises a 3-1 cover part formed by allowing the third cover member to be folded in a direction perpendicular to one surface located on the third heat insulating member.

10. The battery module according to claim 9, wherein:
the 3-1 cover part covers the front and rear surface of the end plate which are not covered from the second cover member covering the end plate but are exposed to the outside.

11. The battery module according to claim 9, wherein:
the third cover member comprises a 3-2 cover part that covers a side surface of the end plate exposed to the outside, while being located on both side surfaces of the third cover member.

12. The battery module according to claim 11, wherein:
the third cover member further comprises a 3-3 cover part extending in the longitudinal direction of the 3-2 cover part.

13. The battery module according to claim 12, wherein:
the 3-3 cover part cover the front surface and the rear surface of the end plate by allowing the 3-2 cover part to be folded in a direction perpendicular to one surface located on the third heat insulating member.

14. The battery module according to claim 1, wherein:
the cover member comprises a fourth cover member located while covering a bottom part which is a lower part of the lower frame.

15. The battery module according to claim 14, wherein:
the fourth cover member is one region which extends in the height direction of the second cover member covering the end plate and the third cover member covering both side surface parts of the module frame, respectively.

16. The battery module according to claim 15, wherein:
the fourth cover member is a portion formed by allowing the second cover member to be folded in a direction perpendicular to one surface located on the end plate, and
the fourth cover member is a portion formed by allowing the third cover member to be folded in a direction perpendicular to one surface located on both side surface parts of the module frame.

17. The battery module according to claim 1, wherein:
the heat insulating member comprises silicon(Si).

18. The battery module according to claim 1, wherein:
the cover member comprises an insulating material made of mica(MICA) or an inorganic material.

19. A battery pack comprising the battery module according to claim 1.
